# EUROPEAN PATENT APPLICATION

(11) **EP 4 847 274 A1**
(43) Date of publication of application: **02.12.2026**
(21) Application number: 26180155.9
(22) Date of filing: 21.05.2026
(51) Int. Cl.: B60C 9/18, B60C 11/03, B60C 11/12

(54) **PNEUMATIC TIRE**

(30) Priority: 27.05.2025 JP 2025087847; 27.05.2025 JP 2025087848
(71) Applicant: Toyo Tire Corporation, Itami-shi, Hyogo 664-0847 (JP)
(72) Inventor: HIRATA, Michihiro, Itami-shi, Hyogo, 664-0847 (JP)
(74) Representative: Müller-Boré & Partner Patentanwälte PartG mbB

(57) **Abstract**

A pneumatic tire is provided that can ensure a drainage property. A tire (1) includes: a shoulder slit (84) provided in a shoulder land (63), and having a component that extends in the tire-axial direction; an axial-direction sipe (91) which is disposed on an extension line of the shoulder slit (84), and communicating the shoulder slit (84) and the outside main groove (72); a belt (31) disposed in a tread (30); and a belt reinforcement layer (34) disposed to reinforce the belt (31), the belt reinforcement layer (34) including a double portion (34b) in which the belt reinforcement layer (34) is arranged in two layers in the tire-circumferential direction in a predetermined range, in which an end portion (34c) on an inner side in the tire-axial direction of the double portion (34b) is at a position overlapping in a tire-circumferential direction with the axial-direction sipe (91).

## Description

### BACKGROUND OF THE INVENTION

### Field of the Invention

The present disclosure relates to a pneumatic tire.

### Related Art

In recent years, a reduction in vehicle exterior noise has been sought. For a reduction in vehicle exterior noise, a reduction in air column resonance has been known as an effective technique. Air column resonance is sound generated by air entering and exiting a columnar space produced between main grooves and the ground surface, and can be reduced by decreasing the amount of air entering and exiting the columnar space by making the cross-sectional area of the main grooves smaller.

Patent Document 1 discloses technology for performing noise reduction resulting from main grooves by focusing on the volume proportion of the center main groove to the shoulder main groove.
Patent Document 1: Japanese Unexamined Patent Application, Publication No. 2024-49907
Patent Document 2: Japanese Unexamined Patent Application, Publication No. 2003-170709

### SUMMARY OF THE INVENTION

However, if making the cross-sectional area of the main grooves smaller, the amount of water that can be drained decreases, and there is concern over the performance relating to drainage such as wet braking performance and hydroplaning performance declining. In addition, depending on the tire ground contact shape, the area of the main groove actually making ground contact will differ, and thus it may not be possible to appropriately decrease noise.

An object of the present disclosure is to provide a pneumatic tire that can secure a drainage property.

A pneumatic tire of the present disclosure includes: a plurality of main grooves extending along a tire-circumferential direction; a shoulder slit provided in a shoulder land that is provided more to an outer side in a tire-axial direction than an outside main groove disposed outermost in the tire-axial direction among the plurality of the main grooves, and having a component that extends in the tire-axial direction; an axial-direction sipe which is a groove disposed on an extension line of the shoulder slit, having a component extending in the tire-axial direction, and having a narrower groove width than the shoulder slit, and communicating the shoulder slit and the outside main groove; a belt disposed in a tread; and a belt reinforcement layer disposed on an outer side in a tire-radial direction of the belt to reinforce the belt, the belt reinforcement layer including a double portion in which the belt reinforcement layer is arranged in two layers in the tire-circumferential direction in a predetermined range from an end portion on an outer side in the tire-axial direction of the belt reinforcement layer to the inner side in the tire-axial direction, in which an end portion on an inner side in the tire-axial direction of the double portion is at a position overlapping in a tire-circumferential direction with the axial-direction sipe.

According to the present disclosure, it is possible to provide a pneumatic tire that can secure a drainage property.

### BRIEF DESCRIPTION OF THE DRAWINGS

FIG. 1 is a half sectional view in a tire-axial direction showing the internal structure of a tire 1, which is a pneumatic tire for vehicles according to an embodiment;
FIG. 2 is a development diagram developing a part of a tread surface 38 of the tire 1;
FIG. 3 is a tire-axial direction cross-sectional view sectioning an inside main groove 71 in a sectional plane passing through the tire rotation axis;
FIG. 4 is a tire-axial direction cross-sectional view sectioning an outside main groove 72 in a sectional plane passing through the tire rotation axis;
FIG. 5 is a partial expanded view partially magnifying to show a shoulder land 63 in FIG. 2;
FIG. 6 is a cross-sectional view sectioning the tire 1 along an extending direction of a shoulder slit 84 and an axial-direction sipe 91 at a position along the arrows A-A in FIG. 5;
FIG. 7 is a cross-sectional view sectioning the tire 1 along a circumferential-direction sipe 92 at a position along the arrows B-B in FIG. 5;
FIG. 8 is a table summarizing the results of comparative experiments for comparing the noise performance and drainage performance of the tire 1;
FIG. 9 is a view showing a tire ground contact shape of the tire 1 according to an example;
FIG. 10 is a view showing a tire ground contact shape of the tire according to a Comparative Example 1; and
FIG. 11 is a table summarizing the results of comparative experiments for comparing differences in pattern noise.

### DETAILED DESCRIPTION OF THE INVENTION

Hereinafter, modes for carrying out the present disclosure will be described by referencing the drawings, etc.

### (Embodiment)

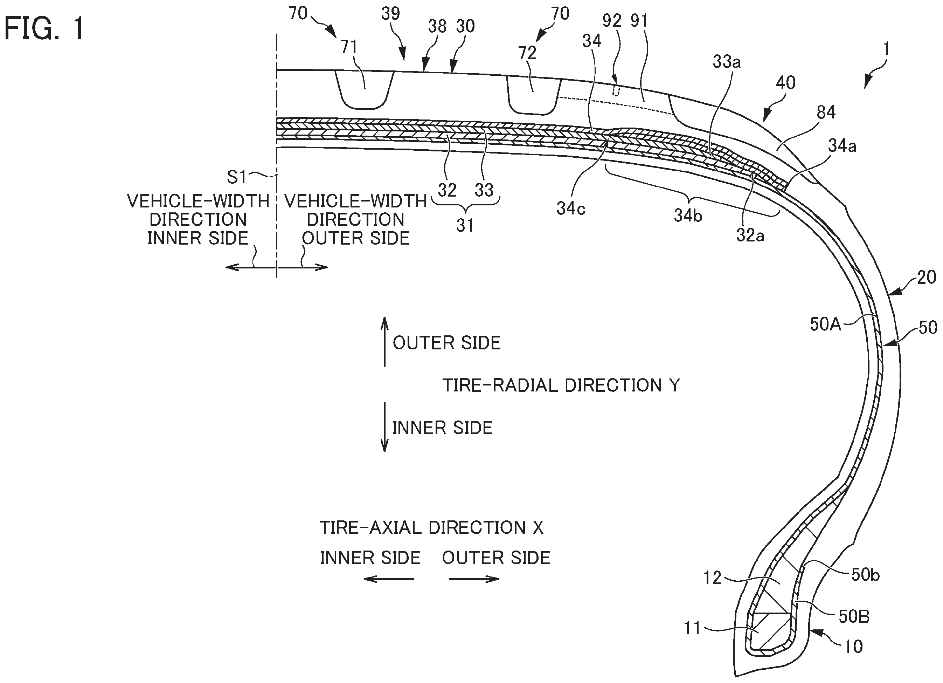

FIG. 1 is a half sectional view in a tire-axial direction showing an internal structure of a tire 1, which is a pneumatic tire for vehicles according to an embodiment. This tire 1 is suitable as a tire for passenger vehicles, for example. The cross-sectional view of FIG. 1 is a cross-sectional view along a tire-axial direction in an unloaded state mounting the tire 1 on a regular rim (not shown), and filling with the regular internal pressure.

Regular rim is a rim prescribed according to tire specifications, and in the case of ETRTO, is a "Measuring Rim". Regular internal pressure is the air pressure prescribed according to tire specifications, and in the case of ETRTO, is "INFLATION PRESSURE". The regulator internal pressure is normally set to 250 kPa in the case of a tire for passenger vehicles, and is set to 290 kPa in the case of a tire indicated as Extra Load or Reinforced on the tire. It should be noted that the rated load is "LOAD CAPACITY" in the case of ETRTO.

The internal structure of tire 1 is basically left-right symmetrical in a cross section along the tire-axial direction. FIG. 1 shows the half section of the right half of the tire 1, and the internal structure is the same structure also for the left side (not shown). In FIG. 1, the symbol S1 is the tire equatorial plane. The tire equatorial plane S1 is a plane orthogonal to the tire rotation axis, and is a plane positioned at the center in the tire-axial direction.

Herein, tire-axial direction is a direction parallel to the tire rotation axis, and is the left/right direction in the paper plane of FIG. 1. FIG. 1 illustrates as tire-axial direction X. Inner side in tire-axial direction is a direction approaching the tire equatorial plane S1, and is the left side in the paper plane of FIG. 1. Outer side in tire-axial direction is a direction distancing from the tire equatorial plane S1, and is the right side in the paper plane of FIG. 1.

In addition, tire-radial direction is a direction perpendicular to the tire rotation axis, and is the up/down direction in the paper plane of FIG. 1. In FIG. 1, it is illustrated as tire-radial direction Y. The outer side in the tire-radial direction is a direction distancing from the tire rotation axis, and is an upper side in the paper plane of FIG. 1. The inner side in the tire-radial direction is a direction approaching the tire rotation axis, and is a lower side in the paper plane of FIG. 1.

As shown in FIG. 1, the tire 1 includes: a pair of beads 10; a pair of sidewalls 20 extending from each of the pair of beads 10 to the outer side in the tire-radial direction; a tread 30 arranged between the pair of sidewalls 20; a shoulder 40 which is a portion transitioning from the sidewall 20 to the tread 30; a carcass ply 50 bridged and arranged between the pair of beads 10; etc. It should be noted that, although an inner liner is also provided to the tire inner cavity side of the carcass ply 50, it is omitted from FIG. 1. In addition, the tire 1, for example, is configured by combining various different rubber members such as a sidewall rubber constituting the sidewalls, rim strip rubber constituting the periphery of the bead 10, and tread rubber constituting the tread 30; however, differentiation of these rubber members and hatching are omitted in FIG. 1.

The pair of beads 10 are arranged at both sides in the tire-axial direction, at an end portion on the inner side in the tire-radial direction. The beads 10 each include a bead core 11, and a bead filler 12 extending from the bead core 11 to the outer side in the tire-radial direction.

The bead core 11 is an annular member in which bead wires made by bead wires made of rubber-coated metal being wrapped around in the tire-circumferential direction several times. The bead core 11 is a member playing the role of fixing the tire 1 filled with air to the rim. The bead filler 12 takes on a tapered shape having a thickness which decreases as extending from the tire-radial direction inner side to the tire-radial direction outer side. The bead filler 12 is provided in order to raise the rigidity of a peripheral portion of the bead 10, and ensure high maneuverability and stability. The bead filler 12, for example, is configured from rubber having higher hardness than the surrounding rubber members.

The sidewall 20 includes a tire-axial direction outer side of the carcass ply 50, and configures the side face on the tire-circumferential direction outer side of the tire 1. The sidewall 20 is a portion which is the most flexible when the tire 1 makes a cushioning action, and normally a flexible rubber having fatigue resistance is adopted in the sidewall rubber constituting the sidewall 20.

At an end of the sidewall 20 on the inner side in the tire-radial direction, a rim line 21c projecting to the outer side in the tire-axial direction is formed. The rim line 21c is an annular line along the tire-circumferential direction.

The tread 30 includes an endless belt 31 and a belt reinforcement layer 34. The belt 31 is arranged on the outer side in the tire-radial direction of the carcass ply 50. The belt reinforcement layer 34 is arranged on the outer side in the tire-radial direction of the belt 31.

The belt 31 is a member reinforcing the tread 30. The belt 31 of the embodiment is a two-layer structure including an inner side belt 32 arranged on the outer side in the tire-radial direction of an inner liner (not shown), and an outer side belt 33 arranged on the outer side in the tire-radial direction of the inner side belt 32. The inner side belt 32 and the outer side belt 33 both include a structure in which a belt cord such as a plurality of steel cords is covered with rubber. The inner side belt 32 is wider than the outer side belt 33. By providing the belt 31, the rigidity of the tire 1 is secured, and the road holding of the tread 30 to the road surface improves. It should be noted that the belt 31 is not limited to a two-layer structure, and may have a structure of one layer or three or more layers.

The belt reinforcement layer 34 is a member that reinforces the tread 30 together with the belt 31. The belt reinforcement layer 34 has a structure in which a plurality of organic fiber cords having an insulating property such as polyamide fiber, for example, is covered with rubber. The belt reinforcement layer 34 is wider than the belt 31, and covers the entirety of the belt 31 from a tire outer surface side. A predetermined range from the end portion 34a on the outer side in the tire-axial direction of the belt reinforcement layer 34 to an inner side in the tire-axial direction forms a double portion 34b in which this belt reinforcement layer is doubly arranged in the tire-circumferential direction. This double portion 34b covers the end 32a on the outer side in the tire-axial direction of the inner side belt 32 and the end 33a on the outer side in the tire-axial direction of the outer side belt 33 from the tire outer surface side. In addition, the end portion 34c on the inner side in the tire-axial direction of the double portion 34b is at a position overlapping with an axial-direction sipe 91 described later in the tire-circumferential direction. By providing the belt reinforcement layer 34, it is possible to achieve an improvement in durability of the tire 1, reduction in road noise while travelling, etc.

In addition, in the tire 1 according to the present embodiment, by the end portion 34c on the inner side in the tire-axial direction of the double portion 34b and the axial-direction sipe 91 overlapping in the tire-circumferential direction, a high drainage property is ensured. In other words, since the end portion 34c on the inner side in the tire-axial direction of the double portion 34b is at a position overlapping with the axial-direction sipe 91 arranged more to the outer side in the tire-axial direction than the outside main groove 72, the road holding of the shoulder land 63 becomes lower, and thus the ground contact shape of the tire 1 is rounded. If the ground contact shape is rounded, the road holding lowers at the shoulder side, and the road holding of the center land 61 improves. When taking the tire 1 as a whole, regarding the drainage property, since the drainage property of the center land 61 becomes dominant, the drainage property of the tire 1 can be improved. Consequently, even when performing a reduction in vehicle exterior noise by changing the cross-sectional area of the main grooves as described later, it is possible to ensure a favorable drainage property. It should be noted that the belt reinforcement layer 34 is not limited to a single layer structure as in the embodiment, and may have a structure of two layers, or three or more layers. In addition, since the end portion 34c on the inner side in the tire-axial direction of the double portion 34b is at a position overlapping the axial-direction sipe 91 arranged more to an outer side in the tire-axial direction than the outside main groove 72, the road holding of the shoulder land 63 provided more to the outer side than the main groove rises, and thus the drainage property can be improved.

The tread 30 is configured from the tread rubber arranged on the outer side in the tire-radial direction of the belt reinforcement layer 34. The outer surface of the tread 30 constitutes a tread surface 38 that makes ground contact with the road surface. A tread pattern 39 is provided to the tread surface 38.

The shoulder 40 is a portion transitioning from the sidewall 20 to the tread 30. The shoulder 40 includes a part of the tread surface 38 on the outer side in the tire-axial direction.

The carcass ply 50 is bridged between the pair of beads 10. The carcass ply 50 is embedded within the tire 1, in a form passing through the tire inner cavity side of the pair of sidewalls 20, the pair of shoulders 40 and the tread 30 between the pair of beads 10. In the tread 30, the belt 31 is arranged on the outer side in the tire-radial direction of the carcass ply 50.

The carcass ply 50 includes a plurality of ply cords (not shown) serving as the backbone of the tire 1. The plurality of ply cords extend in plane along the tire-width direction, for example, and are arranged side by side in the tire-circumferential direction. Each ply cord is configured from an insulative organic fiber cord such as polyester or polyamide, or the like. The carcass ply 50 is configured by the plurality of ply cords being covered with rubber.

The carcass ply 50 includes a ply main body 50A, and a pair of winding parts 50B
The ply main body 50A is a portion extending from the tread 30 to the inner side in the tire-axial direction of each of the pair of beads 10 through each of the pair of shoulders 40 and the pair of sidewalls 20. The pair of winding parts 50B are portions folded back to the outer side in the tire-radial direction by being wound from the ply main body 50A to each of the pair of bead cores 11. It should be noted that, in the present embodiment, the winding part 50B has an end portion provided at a position adjacent to the bead filler 12; however, the winding part 50B may extend along the sidewall 20, and have an end portion thereof reaching an end on the outer side in the tire-axial direction of the tread 30.

The carcass ply 50 of the embodiment is a single-layer structure; however, the carcass ply 50 may be two layers, or may be three or more layers. In the case of the carcass ply 50 being a single-layer structure, it is preferable in the point of weight reduction of the tire 1 being achieved.

Although not illustrated, an inner liner is provided to the tire 1 of the present embodiment. The inner liner forms a tire inner cavity surface by covering the inner surface of the ply main body 50A of the carcass ply 50 between the pair of beads 10. The inner liner is configured by air permeation resistant rubber. The air inside the tire inner cavity is prevented from leaking to outside by the inner liner. It should be noted that the inner liner may be a two-layer structure, or may be a single-layer structure.

It should be noted that the configuration of the aforementioned internal structures and each layer are those for which examples were illustrated, and can be modified as appropriate.

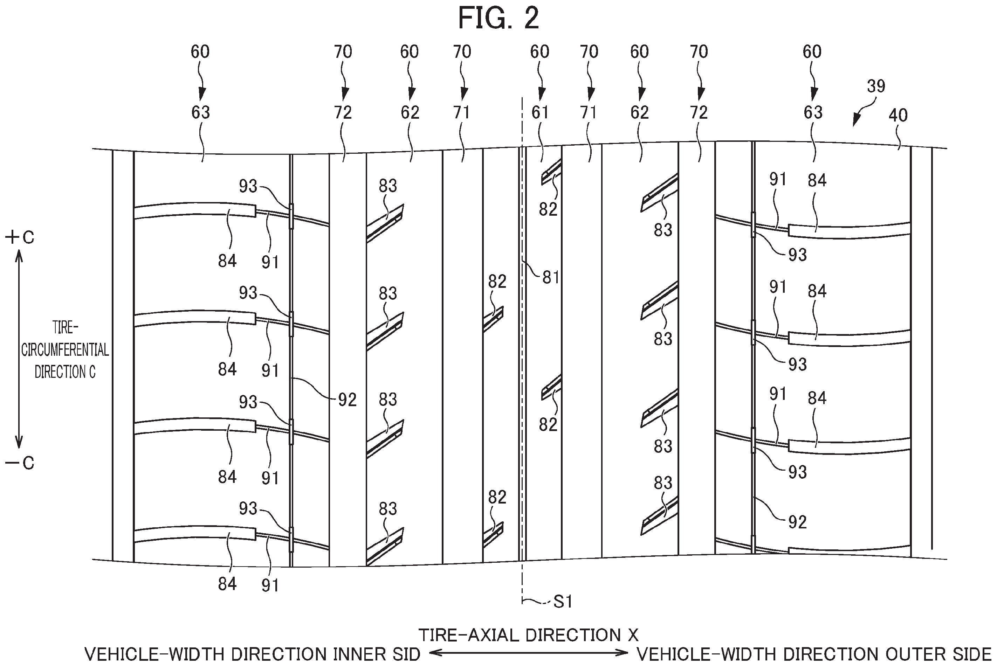

FIG. 2 is a development diagram developing a part of the tread surface 38 of the tire 1. FIG. 2 shows the tire-axial direction X and the tire-circumferential direction C for the tread pattern 39. In addition, although FIG. 2 is a part of a plan view of the tread surface 38 as mentioned above, the following description is provided with the upper side of the paper plane in FIG. 2 as the +C side, and the lower side of the paper plane as the -C side. It should be noted that, in the tire 1 of the present embodiment, the rotation direction of the tire 1 varies when the vehicle moves forward, depending on the position at which mounting the tire 1. Consequently, this +C side or -C side is a convenient direction for describing the tread pattern 39, and is not defining the rotation direction of the tire. In addition, in FIG. 2, the right side in the drawing is the outer side in the vehicle-width direction, and the left side is the inner side in the vehicle-width direction.

The tread pattern 39 of the embodiment includes a plurality of lands 60, and a plurality of main grooves 70 arranged between a plurality of the lands 60, and extending in the tire-circumferential direction. Each of the plurality of lands 60 is a rib extending annularly along the tire-circumferential direction. Each of the plurality of main grooves 70 is a groove of relatively wide width extending annularly along the tire-circumferential direction. The lands 60 make contact with the road surface and generate friction, and bear the function of transmitting drive force and braking of the vehicle to the road surface. The main grooves 70 mainly bear the drainage function of the tire 1. It should be noted that, in the following description, width direction of the land 60 and main groove 70 are synonymous with the tire-axial direction (or tire-width direction), and width of the land 60 and main groove 70 refer to dimensions in the tire-axial direction.

In the tread pattern 39 of the embodiment, the patterns are similar left and right of the tire equatorial plane S1 at a glance; however, it is an asymmetric pattern in which the positional relationship between a second sloped slit 83 and the axial-direction sipe 91 is different from left to right. It should be noted that, due to substantially the same grooves being arranged on the left and right of the tire equatorial plane S1, in FIG. 2, the same reference symbols are attached to the same configurations or configurations having the same function on both sides centered around the tire equatorial plane S1. In the following description, descriptions only for one side of the tire equatorial plane S1 are provided, and descriptions for the other side will be omitted. It should be noted that the characteristic features of the present disclosure are not limited to tires with an asymmetric pattern, and can be appropriately used even if a tire with a point-symmetric pattern or a tire with a line-symmetric pattern.

As the main grooves 70 in the present embodiment, an inside main groove 71 and outside main groove 72 are arranged side-by-side from the tire equatorial plane S1 towards the outer side in the tire-axial direction, and a total of four main grooves 70 are arranged. It should be noted that the main grooves 70 are not limited to four, and may be three or more. The inside main groove 71 extends in the tire-circumferential direction along the outer side in the tire-axial direction of the center land 61 described later. The outside main groove 72 is arranged at the outermost side in the tire-axial direction among the plurality of main grooves 70, and extends in the tire-circumferential direction.

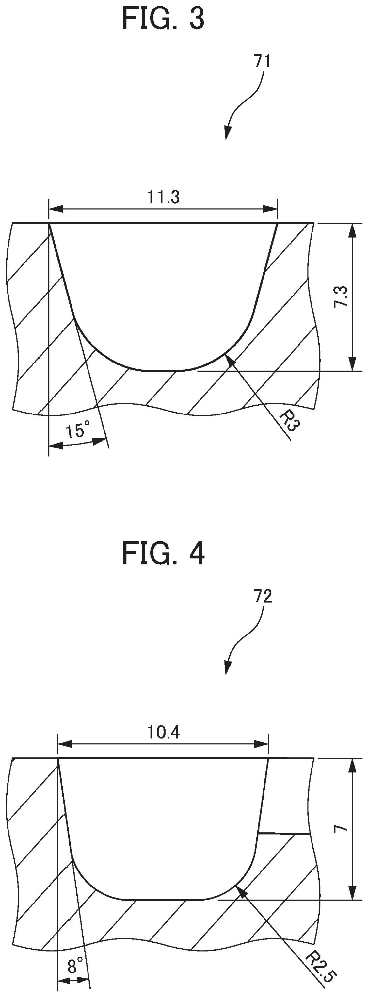

With the tire 1 of the present embodiment, the specific dimensions differ between the inside main groove 71 and the outside main groove 72. FIG. 3 is a cross-sectional view along the tire-axial direction sectioning the inside main groove 71 at a cut section passing through the tire rotation axis. FIG. 4 is a cross-sectional view along the tire-axial direction sectioning the outside main groove 72 at a cut section passing through the tire rotation axis. In FIGS. 3 and 4, units other than the angle are millimeters. The specific dimensions of the inside main groove 71 and the outside main groove 72 differ as shown in FIGS. 3 and 4, and the cross-sectional area of the inside main groove 71 and the outside main groove 72 in these cross sections shown in FIGS. 3 and 4 also differ. With the tire 1 of the present embodiment, the cross-sectional area of the inside main groove 71 is 66.18 mm², and the cross-sectional area of the outside main groove 72 is 63.99 mm².

Referring back to FIG. 2, as the plurality of lands 60, the center land 61, intermediate land 62 and shoulder land 63 are arranged side-by-side from the tire equatorial plane S1 toward the outer side in the tire-axial direction.

The center land 61 is arranged at a position overlapping the tire equatorial plane S1, and interposed between two of the inside main grooves 71, and extends in the tire-circumferential direction.

The intermediate land 62 is arranged at a position interposed between the inside main groove 71 and the outside main groove 72, and extends in the tire-circumferential direction.

The shoulder land 63 is arranged at a position overlapping the shoulder 40 more to the outer side in the tire-axial direction than the outside main groove 72, and extends in the tire-circumferential direction. In other words, the shoulder land 63 is a land extending in the tire-circumferential direction at the outermost side in the tire-axial direction.

On the surface of each of the plurality of lands 60, a plurality of grooves are formed in addition to the main grooves 70, as grooves constituting the tread pattern 39. Grooves other than these main grooves can be classified into sipes and slits. In the present specification and claims, sipes refer to grooves having a groove width less than 2.0 mm, and slits refer to grooves having a groove width of 2.0 mm or more and 6.0 mm or less. Main grooves refer to grooves having a groove width exceeding 6.0 mm, and extending in the tire-circumferential direction. In addition, in the following description, unless expressly mentioned, the dimensions of grooves to which names such as main groove, slit and sipe are attached can be appropriately changed in the above-mentioned ranges.

Hereinafter, the grooves provided to each land will be described. It should be noted that, in the following description, a description is provided for grooves provided at the center of the total width of the tire 1, i.e. outer side in the vehicle-width direction, which is one side on the outer side in the tire-axial direction from the tire equatorial plane S1; however, for the other side, the same reference symbols are attached as the above-mentioned one side, and detailed descriptions thereof will be omitted.

The circumferential-direction slit 81 and the first sloped slit 82 are provided in the center land 61. The circumferential-direction slit 81 is arranged at a position overlapping the tire equatorial plane S1, and extends along the entire circumference in the tire-circumferential direction. Therefore, the center land 61 is divided into two regions in the tire-axial direction by the circumferential-direction slit 81.

The first sloped slit 82 is a groove having one end communicating with the inside main groove 71, and the other end closed within the center land 61, and when viewing from an outer side in the tire-radial direction, is arranged sloping relative to the tire-circumferential direction. On the outer side in the vehicle-width direction, the first sloped slit 82 extends obliquely to the +C side in the tire-circumferential direction as approaching the outer side in the tire-axial direction (outer side in vehicle-width direction). On the other hand, on the inner side in the vehicle-width direction, the first sloped slit 82 extends obliquely to the -C side in the tire-circumferential direction as approaching the outer side in the tire-width direction (inner side in vehicle-width direction). In other words, the first sloped slits 82 are arranged in a point-symmetric manner on the vehicle-width direction inner side and vehicle-width direction outer side.

Herein, point symmetry is point-symmetric positions from rotating 180 degrees based on the center in the total width of the tire 1, and the same applies below. It should be noted that, in the following description, descriptions of each groove are provided with the example of the outer side in the vehicle-width direction, and since each groove on the inner side in the vehicle-width direction is arranged in a point-symmetric manner similarly to the above-mentioned first sloped slits 82, detailed descriptions thereof will be omitted. However, as mentioned above, the tire 1 of the present embodiment is a tire with an asymmetric pattern, and arrangement in the above-mentioned point-symmetric manner indicates not the entire pattern being point symmetric, but rather each groove shape being a point-symmetric shape.

In addition, the first sloped slit 82 includes a groove bottom offsetting the ground contact surface of the center land 61, and a sloped surface sloping so that the groove width becomes wider as approaching the outer side in the tire-radial direction from the groove bottom. In addition, in the first sloped slit 82, the groove width gradually widens as approaching the inside main groove 71 from the closed end side. The first sloped slits 82 are arranged side-by-side in the tire-circumferential direction at fixed intervals.

The second sloped slits 83 are provided in the intermediate land 62. The second sloped slits 83 are grooves having one end communicating with the outside main groove 72, and the other end closed within the intermediate land 62, and when viewed from the outer side in the tire-radial direction, are arranged sloping in the same direction as the first sloped slit 82 relative to the tire-circumferential direction. In addition, the second sloped slit 83 includes a groove bottom offsetting the ground contact surface of the intermediate land 62, and a sloped surface sloping so that the groove width becomes wider as approaching the outer side in the tire-radial direction from the groove bottom. In addition, the second sloped slit 83 has a groove width that gradually widens as approaching the outside main groove 72 from the closed end side. The second sloped slits 83 are arranged side-by-side in the tire-circumferential direction at fixed intervals. In this way, the shape of the second sloped slits 83 is the same as the first slits 82; however, the sizes thereof, i.e. extending length and the groove width, are larger than the first sloped slit 82. In addition, the arrangement pitch at which the second sloped slits 83 are arranged in the circumferential direction is narrower than the arrangement pitch at which the first sloped slits 82 are arranged in the circumferential direction. More specifically, the arrangement pitch at which the second sloped slits 83 are arranged in the circumferential direction is half of the arrangement pitch at which the first sloped slits 82 are arranged in the circumferential direction.

It should be noted that, in the second sloped slit 83, the groove shape itself is a point-symmetric relationship on the vehicle-width direction outer side and vehicle-width direction inner side; however, the positional relationships in the tire-circumferential direction differ between axial-direction sipes 91 describes later. In other words, on the vehicle-width direction outer side, an open end on the outer side in the tire-axial direction of the second sloped slit 83 does not oppose the open end on the inner side in the tire-axial direction of the axial-direction sipe 91. In contrast, on the inner side in the vehicle-width direction, the open end on the outer side in the tire-axial direction of the second sloped slit 83 substantially opposes the open end on the inner side in the tire-axial direction of the axial-direction sipe 91. In this point, the tire 1 of the present embodiment is a tire with an asymmetric pattern.

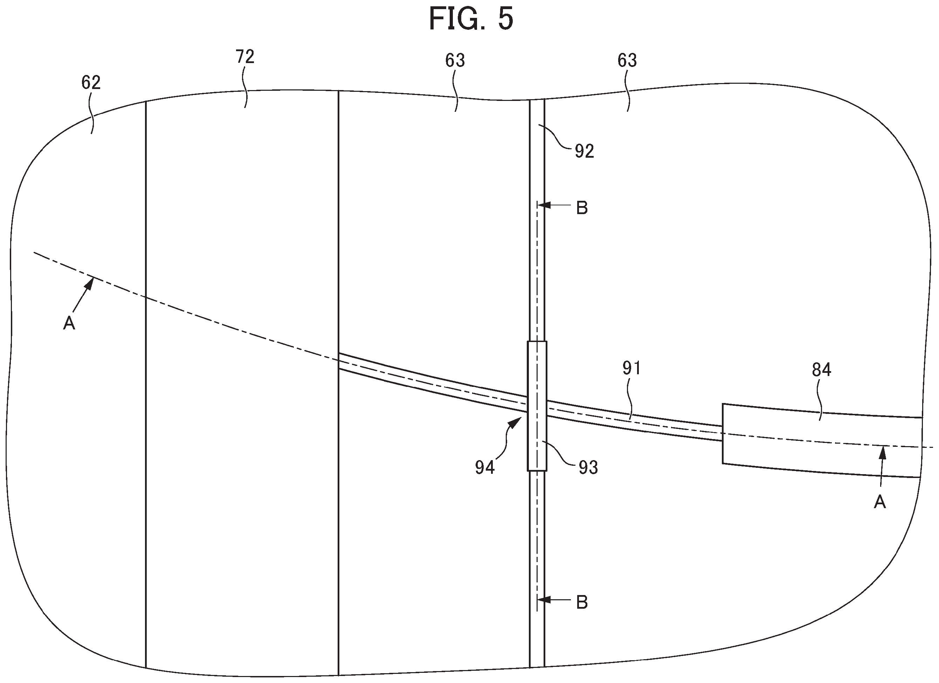

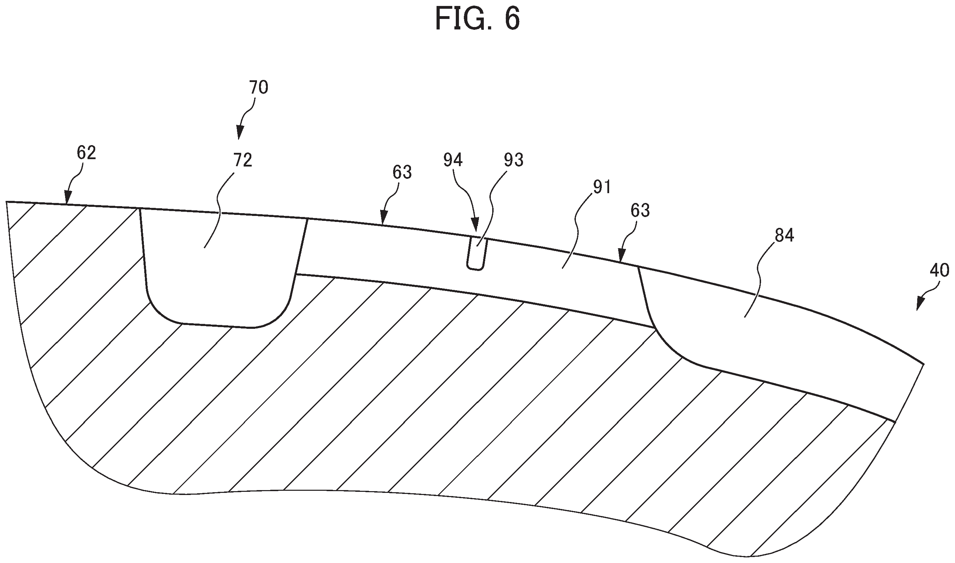

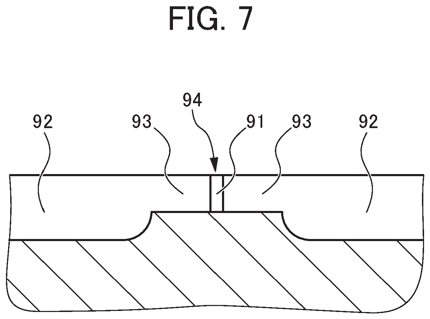

A shoulder slit 84, axial-direction sipe 91 and circumferential-direction sipe 92 are provided to the shoulder land 63. FIG. 5 is a partial expanded view partially magnifying to show the shoulder land 63 in FIG. 2. FIG. 6 is a cross-sectional view sectioning the tire 1 along an extending direction of the shoulder slit 84 and the axial-direction sipe 91 at a position along the arrows A-A in FIG. 5. FIG. 7 is a cross-sectional view sectioning the tire 1 along the circumferential-direction sipe 92 at a position along the arrows B-B in FIG. 5.

The shoulder slit 84 is a groove having a component extending in the tire-axial direction. The shoulder slit 84 opens on the outer side in the tire-axial direction in the vicinity of the shoulder 40, and connects with the axial-direction sipe 91 on the inner side in the tire-axial direction. When viewed from the outer side in the tire-radial direction, the shoulder slit 84 extends to the inner side in the tire-axial direction while gently curving so as to make a slight convex shape at the -C side on the outer side in the vehicle-width direction. The shoulder slit 84 desirably has a width in a direction orthogonal to the extending direction of the groove of 5 mm or more and 20 mm or less. In addition, in the shoulder slit 84, the depth from the ground contact surface of the shoulder land 63 varies depending on the position in the tire-axial direction; however, the groove depth at a location of deepest depth is desirably 3 mm or more and 6 mm or less. In addition, the groove width of the shoulder slit 84 is narrower than the groove widths of all of the main grooves 70.

The axial-direction sipe 91 is a groove arranged on an extension line of the shoulder slit 84 on the inner side in the tire-axial direction of the shoulder slit 84, and having a component extending in the tire-axial direction. The axial-direction sipe 91 is a groove having a narrower groove width than the shoulder slit 84, and communicates with the shoulder slit 84 and the outside main groove 72. Viewing from the outer side in the tire-radial direction, the axial-direction sipes 91 extend to the inner side in the tire-axial direction, while gently curving so as to make a slight convex shape at the -C side on the outer side in the vehicle-width direction. The axial-direction sipes 91 desirably have a width in a direction orthogonal to the extending direction of the grooves of 0.6 mm or more and 1.4 mm or less.

The circumferential-direction sipes 92 extend along the tire-circumferential direction, and are intersecting with the axial-direction sipes 91. The circumferential-direction sipes 92 are grooves having a narrower groove width than the shoulder slits, and are continuous along the entire circumference in the tire-circumferential direction. The circumferential-direction sipes 92 desirably have a width in a direction orthogonal to the extending direction of the grooves of 0.6 mm or more and 1.4 mm or less. In addition, the circumferential-direction sipes 92 desirably have a depth from the ground contact surface of the shoulder land 63 of 1 mm or more and 3 mm or less.

In addition, a widening shallow groove portion 93 is provided to the circumferential-direction sipe 92. The widening shallow groove portion 93 is a part of the circumferential-direction sipe 92 in the vicinity of an intersection point 94 between the axial-direction sipe 91 and the circumferential-direction sipe 92. In the widening shallow groove portion 93, the groove width of the circumferential-direction sipe 92 becomes wider than the groove width of the circumferential-direction sipe 92 at a position distanced from the intersection point 94
In addition, in the widening shallow groove portion 93, the groove depth of the circumferential-direction sipe 92 becomes shallower than the groove depth of the circumferential-direction sipe 92 at a position distanced from the intersection point 94.

Furthermore, in the vicinity of the intersection point 94 between the axial-direction sipe 91 and the circumferential-direction sipe 92, the groove width of the axial-direction sipe 91 and the groove width of the circumferential-direction sipe 92 are each constant, i.e. the groove width of the axial-direction sipe 91 and the groove width of the circumferential-direction sipe 92 do not change in the vicinity of the intersection point 94. It should be noted that, with the tire 1 of the present embodiment, since the widening shallow groove portion 93 is provided to the circumferential-direction sipe 92 in the vicinity of the intersection point 94, in the vicinity of the intersection point 94 between the axial-direction sipe 91 and the circumferential-direction sipe 92, the groove width of the axial-direction sipe 91 and the groove width of the widening shallow groove portion 93 in the circumferential-direction sipe 92 are each fixed.

At the intersection point 94, since the two grooves are intersecting, if establishing a form in which the grooves intersect as is, the rigidity of the shoulder land 63 at the periphery thereof will be low compared to other sites, and there is concern over noise generating due to the walls on both sides of the groove contacting. In order to reduce this noise, for example, if providing a chamfer in the vicinity of this intersection point 94, it may affect the steering stability due to a decrease in ground contact area, and other noises may generate due to the volume of voids increasing by having a chamfered shape.

Therefore, with the tire 1 of the present embodiment, in the vicinity of the intersection point 94, the groove width in the widening shallow groove portion 93 of the axial-direction sipe 91, and the groove width of the circumferential-direction sipe 92 are respectively constant, and thus the widening shallow groove portion 93 is further provided. Consequently, with the tire 1 of the present embodiment, a rigidity decline in the shoulder land 63 at the periphery is suppressed, while slightly curbing the decrease in ground contact area. Consequently, it is possible to suppress noise generation from the walls on both sides of the groove making contact, and it is possible to curb adverse effects on the driving stability. In addition, since the widening shallow groove portion 93 widens the groove width, and makes the groove depth shallower, there is almost no change in the volume of the void, and other noises caused by the volume of the voids increasing will not occur.

In addition, since the intersection point 94 is a configuration in which the axial-direction sipe 91 having a narrow groove width and deep depth, and the circumferential-direction sipe 92 intersect, in the case of not providing the widening shallow groove portion 93, a shape of the molding die in which projections having a thin thickness and high height intersect is necessary in the molding die for molding the tire 1. With a shape in which thin, high projections intersect, there is a tendency not only for the degree of difficulty in preparation of the molding die to be high, but also the durability of the molding die to be poor. With the tire 1 of the present embodiment, by providing the widening shallow groove portion 93, it is possible to facilitate preparation of the molding die, and also to improve the durability of the molding die.

In order to obtain the aforementioned effects of the widening shallow groove portion 93, it is desirable for the widening shallow groove portion 93 to have a groove width in a direction perpendicular to the extending direction of the groove of 1.0 mm or more and 2.0 mm or less. In addition, the depth from the ground contact surface of the shoulder land 63 at the widening shallow groove portion 93 is desirably 1.0 mm or more and 3.0 mm or less. In addition, the widening shallow groove portion 93 is desirably a groove width of 110% or more and 150% or less relative to the groove width of the circumferential-direction sipe 92. In addition, the widening shallow groove portion 93 is desirably a groove depth of 40% or more and 60% or less relative to the groove depth of the circumferential-direction sipe 92.
<A>
   <A-1>
   A pneumatic tire includes: a plurality of main grooves extending along a tire-circumferential direction;
   a shoulder slit provided in a shoulder land that is provided more to an outer side in a tire-axial direction than an outside main groove disposed outermost in the tire-axial direction among the plurality of the main grooves, and having a component that extends in the tire-axial direction;
   an axial-direction sipe which is a groove disposed on an extension line of the shoulder slit, having a component extending in the tire-axial direction, and having a narrower groove width than the shoulder slit, and communicating the shoulder slit and the outside main groove;
   a belt disposed in a tread; and
   a belt reinforcement layer disposed on an outer side in a tire-radial direction of the belt to reinforce the belt, the belt reinforcement layer including a double portion in which the belt reinforcement layer is arranged in two layers in the tire-circumferential direction in a predetermined range from an end portion on an outer side in the tire-axial direction of the belt reinforcement layer to the inner side in the tire-axial direction,
   in which an end portion on an inner side in the tire-axial direction of the double portion is at a position overlapping in a tire-circumferential direction with the axial-direction sipe.
<A-2>
   In the pneumatic tire as described in <A-1>,
   in a tire ground contact shape, when defining a ground contact length in the tire-circumferential direction at a position 10% to the inner side of an entire width of the tire ground contact surface shape from an end portion in the tire-width direction to the inner side as L10, and
   defining a maximum ground contact length in the tire-circumferential direction of the tire ground contact shape as L,
   a relationship of 0.65≤L10/L≤0.70 is satisfied.
<A-3>
   In the pneumatic tire as described in <A-1> or <A-2>,
   the main grooves include an inside main groove disposed more to an inner side in the tire-axial direction than the outside main groove, and
   among the outside main groove and the inside main groove which are adjacent to each other, when defining a cross-sectional area of the inside main groove as CSAI, and defining a cross-sectional area of the outside main groove as CSAO,
   a relationship of 0.96≤CSAO/CSAI≤1.00 is satisfied.
<A-4>
   In the pneumatic tire as described in <A-1> or <A-2>,
   the shoulder slits and the axial-direction sipes are provided to each of the shoulder lands on both sides in the tire-axial direction.
<A-5>
   The pneumatic tire as described in <A-1> or <A-2> further includes
   a circumferential-direction sipe which is a groove provided to the shoulder land, extending along the tire-circumferential direction and having a narrower groove width than the shoulder slit, and intersecting with the axial-direction sipe, in which in a vicinity of an intersection point between the axial-direction sipe and the circumferential-direction sipe, a groove width of the axial-direction sipe and a groove width of the circumferential-direction sipe are each constant.

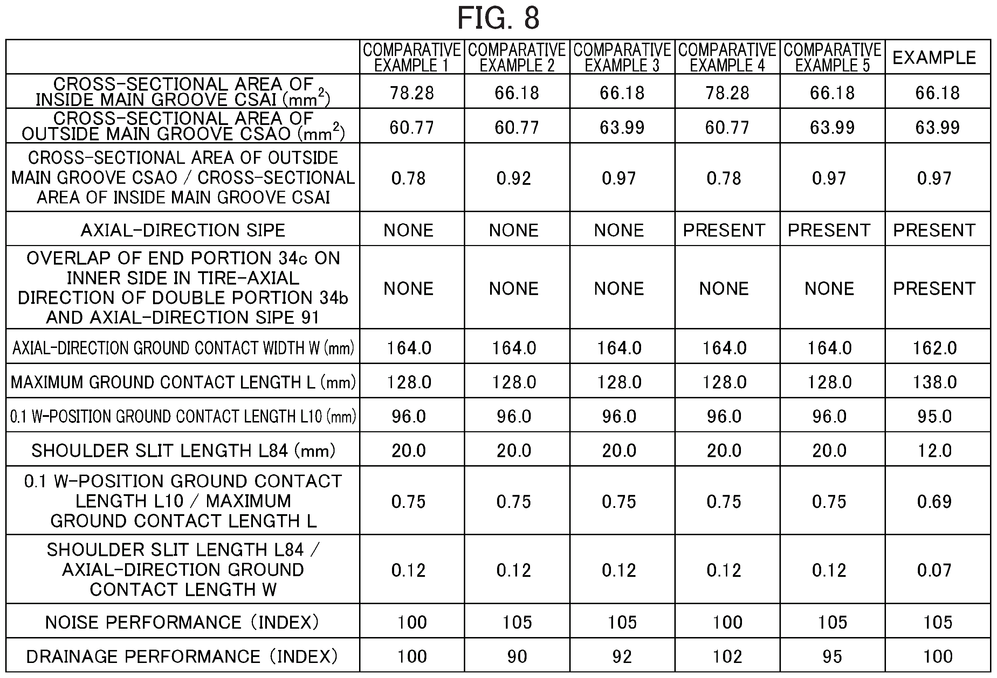

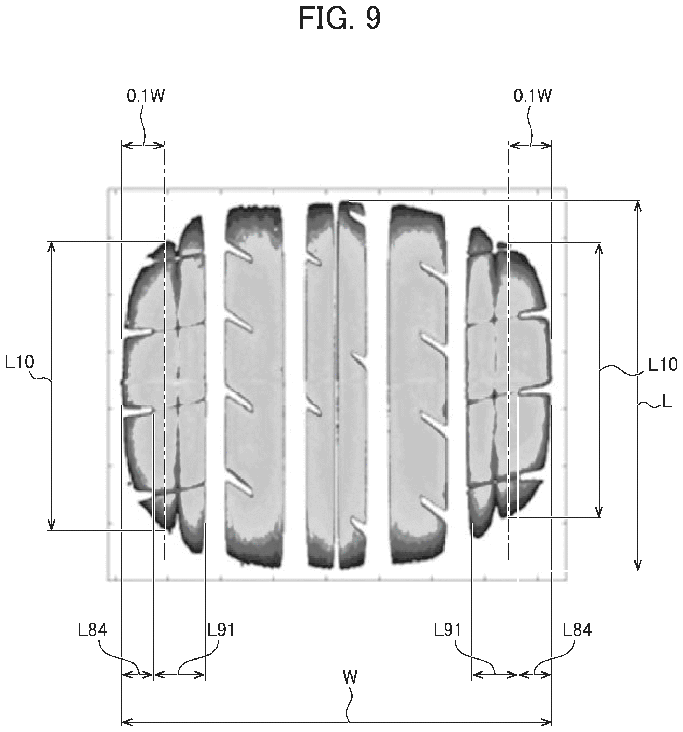

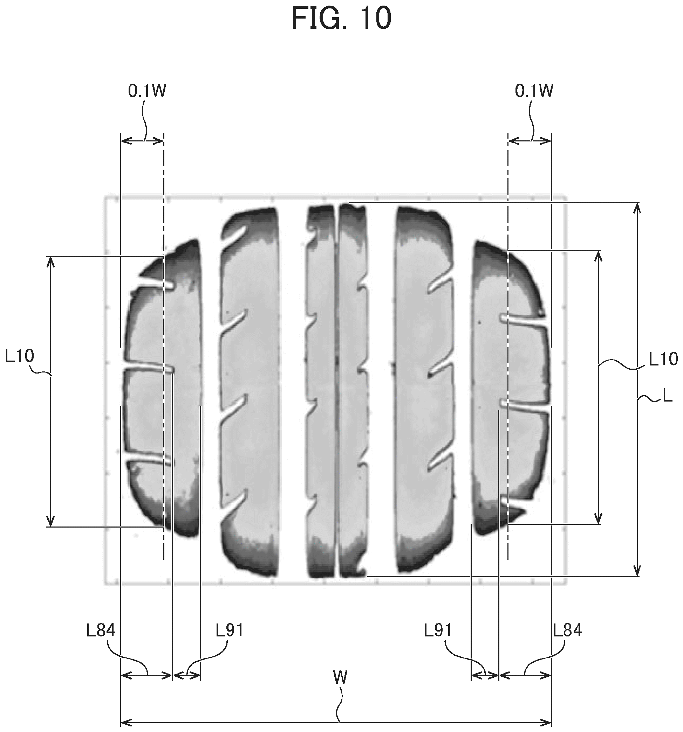

With the tire 1 of the present embodiment, by the aforementioned tread pattern 39 being provided, it is possible to obtain the characteristic tire ground contact shape shown below, and effectively reduce the vehicle exterior noise, while maintaining drainage property. Hereinafter, this point will be described. Comparative experiments for confirming the noise performance and drainage performance of the tire 1 according to the present embodiment were conducted. FIG. 8 is a table summarizing the results of comparative experiments for comparing the noise performance and drainage performance of the tire 1. FIG. 9 is a view showing a tire ground contact shape of the tire 1 according to an example. FIG. 10 is a view showing a tire ground contact shape of the tire according to a Comparative Example 1.

Comparative experiments were conducted using tires of Comparative Examples 1 to Comparative Examples 5, and an Example, as shown in FIG. 8. It should be noted that the tire of the Example is the tire 1 of the aforementioned present embodiment. In a noise evaluation experiment, a tire bend test was performed, and the O.A. level (overall value) when traveling at a speed of 50 km/h with 470 kgf load was measured. The column of noise performance (INDEX) in FIG. 8 establishes the case of Comparative Example 1 as 100, indexes the performance of the remaining Comparative Examples 2 to 4 and the Example, and shows that the noise performance is better with a higher index number.

In addition, in the experiment for drainage performance, the tire was mounted to a 17x7 rim, filled with 220 kPa internal pressure, and in the actual vehicle evaluation with two passengers, the speed was gradually increased in 10 km/h increments on a wet road with 10 mm water depth, and the speed until hydroplaning occurred was displayed by index number with the value of Comparative Example 1 as 100. In the item of drainage performance in FIG. 8, it is shown that drainage property is more superior with greater index number.

The axial-direction ground contact width W, maximum ground contact length L, 0.1 W-position ground contact length L10, and shoulder slit length L84 in FIG. 8 are measurement values of each part of the tire ground contact shape shown in FIGS. 9 and 10. Herein, shoulder slit length L84 is a length (width) in the tire-axial direction of the shoulder slit 84 of the tire ground contact shape. In addition, in the tire ground contact shape, 0.1 W-position ground contact length L10 is the ground contact length in the tire-circumferential direction at a position 10% to the inner side of the total width of the tire ground contact shape from an end portion in the tire-width direction to the inner side. In addition, the above-mentioned tire ground contact shape is the shape of the tire ground contact surface when setting the tire that is the experiment subject to an air pressure of 250 kPa, and applying a load of 470 kgf.

As shown in FIG. 8, with the tire 1 (Example) of the present embodiment having overlap of the end portion 34c on the inner side in the tire-axial direction of the double portion 34b and the axial-direction sipe 91, the noise performance is improved while maintaining the drainage performance. Herein, the cross-sectional area CSAO of the outside main groove / cross-sectional area CSAI of the inside main groove are considered to effectively act in the improvement of noise performance. When defining the cross-sectional area of the outside main groove as CSAO, and defining the cross-sectional area of the inside main groove as CSAI, it is desirable to satisfy the relationship of 0.96≤CSAO/CSAI≤1.00 in order to improve the noise performance.

In addition, the maximum ground contact length as L and the 0.1 W-position ground contact length L10 satisfying the following relationship is desirable due to maintaining or improving the drainage performance, even in the case of changing the cross-sectional area of the main grooves as describe above.$0.65 \leq L 10 / L \leq 0.70$

In addition, the shoulder slit length L84 / axial-direction ground contact width W is desirably 0.05 or more and 0.10 or less.

The following effects are exerted by the tire 1 according to the aforementioned embodiment.
(1) The tire 1 according to the present embodiment includes: a plurality of main grooves 70 extending along a tire-circumferential direction; a shoulder slit 84 provided in a shoulder land 63 that is provided more to an outer side in a tire-axial direction than an outside main groove 72 disposed outermost in the tire-axial direction among the plurality of the main grooves 70, and having a component that extends in the tire-axial direction; an axial-direction sipe 91 which is a groove disposed on an extension line of the shoulder slit 84, having a component extending in the tire-axial direction, and having a narrower groove width than the shoulder slit 84, and communicating the shoulder slit 84 and the outside main groove 72; a belt 31 disposed in a tread 30; and a belt reinforcement layer 34 disposed on an outer side in a tire-radial direction of the belt 31 to reinforce the belt 31, the belt reinforcement layer 34 including a double portion 34b in which the belt reinforcement layer 34 is arranged in two layers in the tire-circumferential direction in a predetermined range from an end portion 34a on an outer side in the tire-axial direction of the belt reinforcement layer 34 to the inner side in the tire-axial direction, in which an end portion 34c on an inner side in the tire-axial direction of the double portion 34b is at a position overlapping in a tire-circumferential direction with the axial-direction sipe 91.

It is thereby possible to improve the road holding of the shoulder lands 63, and ensure the drainage property.

(2) In the tire as described in (1), in a tire ground contact shape, when defining a ground contact length in the tire-circumferential direction at a position 10% to the inner side of an entire width of the tire ground contact surface shape from an end portion in the tire-width direction to the inner side as L10, and defining a maximum ground contact length in the tire-circumferential direction of the tire ground contact shape as L, a relationship of 0.65≤L10/L≤0.70 is satisfied.

It is thereby possible to maintain or improve the drainage performance even in the case of changing the cross-sectional area of the main grooves.

(3) In the tire as described in (1) or (2), the main grooves 70 include an inside main groove 71 disposed more to an inner side in the tire-axial direction than the outside main groove 72, and among the outside main groove 72 and the inside main groove 71 which are adjacent to each other, when defining a cross-sectional area of the inside main groove 71 as CSAI, and defining a cross-sectional area of the outside main groove 72 as CSAO, a relationship of 0.96≤CSAO/CSAI≤1.00 is satisfied.

It is thereby possible to improve the noise performance.

(4) In the tire as described in any one of (1) to (3), the shoulder slits 84 and the axial-direction sipes 91 are provided to each of the shoulder lands 63 on both sides in the tire-axial direction.

It is thereby possible to maintain the drainage property on both sides in the tire-axial direction.

(5) The tire as described in any one of (1) to (4) further includes: a circumferential-direction sipe 92 which is a groove provided to the shoulder land 63, extending along the tire-circumferential direction and having a narrower groove width than the shoulder slit 84, and intersecting with the axial-direction sipe 91, in which, in a vicinity of an intersection point between the axial-direction sipe 91 and the circumferential-direction sipe 92, a groove width of the axial-direction sipe and a groove width of the circumferential-direction sipe are each constant.

A rigidity decline in the shoulder land 63 at the surroundings thereof is thereby suppressed, while slightly curbing a decrease in ground contact area. Consequently, the generation of noise from the walls on both sides of the groove making contact can be suppressed, and adverse effects on the steering stability can be curbed.

### (Modified Embodiments)

Not limiting to the embodiments described above, various modifications and changes are possible, and these are also within the scope of the present disclosure.

(Modified Embodiment 1) The embodiment was described giving an example providing the widening shallow groove portion 93 to the vicinity of the intersection point 94 with the circumferential-direction sipe 92. Not limiting thereto, for example, the widening shallow groove portion may be additionally provided in the vicinity of the intersection point 94 with the axial-direction sipe 91. In addition, a mode may be established in which the widening shallow groove portion is provided only in the vicinity of the intersection point 94 of the axial-direction sipe 91, and the widening shallow groove portion 93 is not provided to the circumferential-direction sipe 92.

(Modified Embodiment 2) The embodiment was described giving an example in which the widening shallow groove portion 93 includes both a configuration as a widening portion having a wider groove width than other portions, and a configuration as a shallow groove portion having a shallower groove depth than other portions. Not limiting to this, for example, only the widening portion may be provided to a vicinity of the intersection point between an axial-direction sipe and a circumferential-direction sipe, or only the shallow groove portion may be provided thereto.

(Modified Embodiment 3) The embodiment was described giving an example in which the shoulder slit 84, axial-direction sipe 91 and circumferential-direction sipe 92 are provided to each of the shoulder lands 63, 63 on both sides in the tire-axial direction. Not limiting to this, for example, it may be a form in which the shoulder slit 84, axial-direction sipe 91 and circumferential-direction sipe 92 are provided only to one shoulder land 63 in the tire-axial direction.

It should be noted that, although the embodiment and modified embodiments can be used in combination where appropriate, detailed descriptions thereof are omitted. In addition, the present disclosure is not to be limited by each of the embodiments described above.

Furthermore, the present invention includes the pneumatic tire described in the following <B>.
<B>
   Conventionally, technology has been proposed to decrease the pattern noise generated from the tread pattern of a pneumatic tire during travel of a vehicle. For example, technology has been proposed for reducing pattern noise by having microgrooves extending in the circumferential direction, i.e. circumferential-direction sipe, and axial-direction sipe extending in an axial direction intersecting this, and chamfering edges of the intersection portions of these to form chamfered portions. However, with the pneumatic tire of Patent Document 2, a groove of wider width than an axial-direction sipe linked to the axial-direction sipe, i.e. slit, extends long, and thus pattern noise generates in this slit, and the effect of reducing pattern noise has been limited. In addition, if making the chamfered portion larger, there is concern over this portion acting similarly to a wide groove, and the risk of pattern noise generating in the chamfered portion is high. Therefore, the present disclosure has an object of providing a pneumatic tire that can reduce pattern noise. A pneumatic tire according to <B> includes the following combinations.
<B-1>
   A pneumatic tire includes: a plurality of main grooves extending along a tire-circumferential direction;
   a shoulder slit provided in a shoulder land that is provided more to an outer side in a tire-axial direction than an outside main groove disposed outermost in the tire-axial direction among the plurality of the main grooves, and having a component that extends in the tire-axial direction;
   an axial-direction sipe which is a groove disposed on an extension line of the shoulder slit, having a component extending in the tire-axial direction, and having a narrower groove width than the shoulder slit, and communicating the shoulder slit and the outside main groove;
   a circumferential-direction sipe which is a groove provided to the shoulder land, extending along the tire-circumferential direction and having a narrower groove width than the shoulder slit, and intersecting with the axial-direction sipe, in which in a tire ground contact shape, a length of the shoulder slit in the tire-axial direction is shorter than a length of the axial-direction sipe in the tire-axial direction.
<B-2>
   In the pneumatic tire as described in <B-1>,
   the shoulder slits, the axial-direction sipes and the circumferential-direction sipes are provided to each of the shoulder lands on both sides in the tire-axial direction.
<B-3>
   In the pneumatic tire as described in <B-1> or <B-2>,
   in a vicinity of an intersection point between the axial-direction sipe and the circumferential-direction sipe, a groove width of the axial-direction sipe and a groove width of the circumferential-direction sipe are each constant.
<B-4>
   In the pneumatic tire as described in <B-1> or <B-2>,
   in a vicinity of an intersection point between the axial-direction sipe and the circumferential-direction sipe, a widening groove portion is provided at which a groove width of at least one of the axial-direction sipe and the circumferential-direction sipe is wider than a groove width of at least one of the axial-direction sipe and the circumferential-direction sipe at a position distanced from the intersection point.
<B-5>
   In the pneumatic tire as described in <B-1> or <B-2>,
   in a vicinity of an intersection point between the axial-direction sipe and the circumferential-direction sipe, a shallow groove portion is provided at which a groove depth of at least one of the axial-direction sipe and the circumferential-direction sipe is shallower than a groove depth of at least one of the axial-direction sipe and the circumferential-direction sipe at a position distanced from the intersection point.

According to the pneumatic tire according to the above <B>, it is possible to provide a pneumatic tire that can reduce pattern noise.

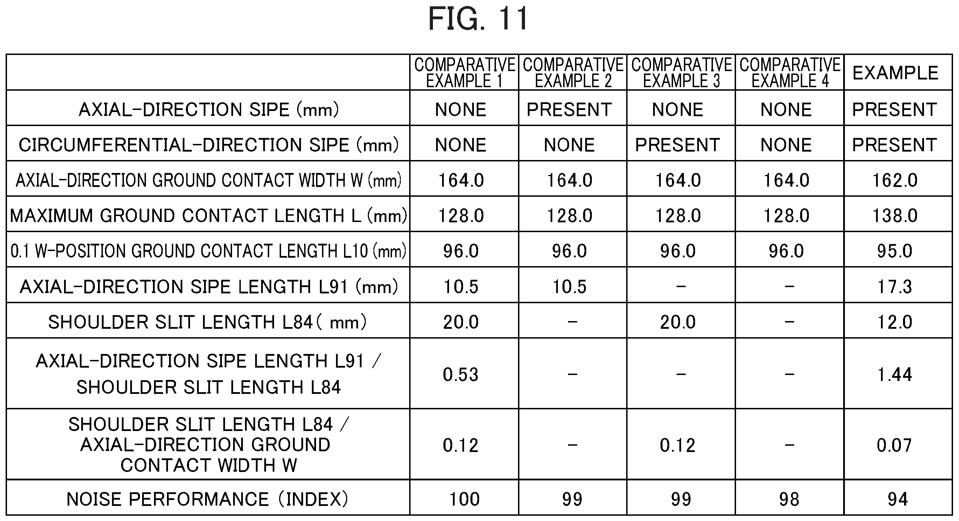

By the aforementioned tread pattern 39 being provided in the tire 1 according to <B>, it is possible to obtain the characteristic tire ground contact shape shown below, whereby pattern noise is effectively reduced. Hereinafter, this point will be described. In order to confirm the effect of reducing the pattern noise by the tire 1 of the present embodiment, comparative experiments for comparing the difference in pattern noises due to the differences in tire ground contact shape were performed. FIG. 11 is a table summarizing the results of the comparative experiments for comparing the differences in pattern noise.

The comparative experiments were performed using the tires of Comparative Example 1 to Comparative Example 4, and the Example, as shown in FIG. 11. It should be noted that the tire of the Example is the tire 1 of the aforementioned present embodiment. In a noise evaluation experiment, a tire bend test was performed, and the O.A. level (overall value) when traveling at a speed of 50 km/h with 470 kgf load was measured. The column of noise performance (INDEX) in FIG. 11 establishes the case of Comparative Example 1 as 100, indexes the performance of the remaining Comparative Examples 2 to 4 and the Example, and, unlike the comparative experiment shown in FIG. 8 described above, shows that the noise performance is better with a lower index number.

The axial-direction ground contact width W, maximum ground contact length L, 0.1 W-position ground contact length L10, axial-direction sipe length L91 and shoulder slit length L84 in FIG. 11 are actual values of each part in the tire ground contact shape shown in FIGS. 9 and 10. Herein, axial-direction sipe length L91 is the length (width) in the tire-axial direction of the axial-direction sipe 91 in the tire ground contact shape. Shoulder slit length L84 is a length (width) in the tire-axial direction of the shoulder slit 84 of the tire ground contact shape. In addition, in the tire ground contact shape, 0.1 W-position ground contact length L10 is the ground contact length in the tire-circumferential direction at a position 10% to the inner side of the total width of the tire ground contact shape from an end portion in the tire-width direction to the inner side. In addition, the above-mentioned tire ground contact shape is the shape of the tire ground contact surface when setting the tire that is the experiment subject to an air pressure of 250 kPa, and applying a load of 470 kgf.

As shown in FIG. 11, axial-direction sipe length L91 / shoulder slit length L84 being 1.00 or more is desirable for reducing noise. In other words, in the tire ground contact shape, the length in the tire-axial direction of the shoulder slit 84 being shorter than the length in the tire-axial direction of the axial-direction sipe is desirable for reducing pattern noise. Furthermore, axial-direction sipe length L91 / shoulder slit length L84 being 1.0 or more is more desirable.

In addition, shoulder slit length L84 / axial-direction ground contact width W is desirably 0.05 or more and 0.10 or less.

The following effects are exerted by the tire 1 according to the aforementioned embodiment.
(1) The tire 1 according to the present embodiment includes: a plurality of main grooves 70 extending along a tire-circumferential direction; a shoulder slit 84 provided in a shoulder land 63 that is provided more to an outer side in a tire-axial direction than an outside main groove 72 disposed outermost in the tire-axial direction among the plurality of the main grooves 70, and having a component that extends in the tire-axial direction; an axial-direction sipe 91 which is a groove disposed on an extension line of the shoulder slit 84, having a component extending in the tire-axial direction, and having a narrower groove width than the shoulder slit 84, and communicating the shoulder slit 84 and the outside main groove 72; and a circumferential-direction sipes 92 which is a groove provided to the shoulder land 63, extending along the tire-circumferential direction and having a narrower groove width than the shoulder slit 84, and intersecting with the axial-direction sipe 91, in which, in the tire ground contact shape, a length L84 of the shoulder slit 84 in the tire-axial direction is shorter than a length L91 of the axial-direction sipe 91 in the tire-axial direction.

It is thereby possible to provide a pneumatic tire that can reduce pattern noise.

(2) In the tire 1 as described in (1), the shoulder slits 84, the axial-direction sipes 91 and the circumferential-direction sipes 92 are provided to each of the shoulder lands 63 on both sides in the tire-axial direction.

It is thereby possible to obtain an effect of pattern noise reduction on both sides in the tire-axial direction.

(3) In the tire 1 as described in (1) or (2), in a vicinity of an intersection point 94 between the axial-direction sipe 91 and the circumferential-direction sipe 92, a groove width of the axial-direction sipe 91 and a groove width of the circumferential-direction sipe 92 are each constant.

A rigidity decline in the shoulder land 63 at the surroundings thereof is thereby suppressed, while slightly curbing a decrease in ground contact area. Consequently, it is possible to suppress noise generation from the walls on both sides of the groove making contact, and it is possible to curb adverse effects on the driving stability.

(4) In the tire 1 as described in any one of (1) to (3), in a vicinity of an intersection point 94 between the axial-direction sipe 91 and the circumferential-direction sipe 92, a widening shallow groove portion 93 is provided at which a groove width of at least one of the axial-direction sipe 91 and the circumferential-direction sipe 92 is wider than a groove width of at least one of the axial-direction sipe 91 and the circumferential-direction sipe 92 at a position distanced from the intersection point 94.

It is thereby possible to suppress noise generation from the walls on both sides of a groove contacting. In addition, it is possible to facilitate preparation of the molding die for molding the tire 1, and also to improve the durability of the molding die.

(5) In the tire 1 as described in any one of (1) to (4), in a vicinity of an intersection point 94 between the axial-direction sipe 91 and the circumferential-direction sipe 92, a widening shallow groove portion 93 is provided at which a groove depth of at least one of the axial-direction sipe 91 and the circumferential-direction sipe 92 is shallower than a groove depth of at least one of the axial-direction sipe 91 and the circumferential-direction sipe 92 at a position distanced from the intersection point 94.

It is thereby possible to suppress noise generation from the walls on both sides of a groove contacting. In addition, it is possible to facilitate preparation of the molding die for molding the tire 1, and also to improve the durability of the molding die.

### EXPLANATION OF REFERENCE NUMERALS

1 tire
10 bead
11 bead core
12 bead filler
20 sidewall
21c rim line
30 tread
31 belt
32 inner side belt
32a end on outer side in tire-axial direction
33 outer side belt
33a end on outer side in tire-axial direction
34 belt reinforcement layer
34a end portion on outer side in tire-axial direction
34b double portion
34c end portion on inner side in tire-axial direction of
double portion 34b
38 tread surface
39 tread pattern
40 shoulder
50 carcass ply
50A ply main body
50B winding part
60 land
61 center land
62 intermediate land
63 shoulder land
70 main groove
71 inside main groove
72 outside main groove
81 circumferential-direction slit
82 first sloped slit
83 second sloped slit
84 shoulder slit
91 axial-direction sipe
92 circumferential-direction sipe
93 widening shallow groove portion
94 intersection point

## Claims

1. A pneumatic tire (1) comprising:
a plurality of main grooves (70) extending along a tire-circumferential direction;
a shoulder slit (84) provided in a shoulder land (63) that is provided more to an outer side in a tire-axial direction than an outside main groove (72) disposed outermost in the tire-axial direction among the plurality of the main grooves (70), and having a component that extends in the tire-axial direction;
an axial-direction sipe (91) which is a groove disposed on an extension line of the shoulder slit (84), having a component extending in the tire-axial direction, and having a narrower groove width than the shoulder slit (84), and communicating the shoulder slit (84) and the outside main groove (72);
a belt (31) disposed in a tread (30); and
a belt reinforcement layer (34) disposed on an outer side in a tire-radial direction of the belt (31) to reinforce the belt (31), the belt reinforcement layer (34) including a double portion (34b) in which the belt reinforcement layer (34) is arranged in two layers in the tire-circumferential direction in a predetermined range from an end portion (34a) on an outer side in the tire-axial direction of the belt reinforcement layer (34) to the inner side in the tire-axial direction,
wherein an end portion (34c) on an inner side in the tire-axial direction of the double portion (34b) is at a position overlapping in a tire-circumferential direction with the axial-direction sipe (91).

2. The pneumatic tire (1) according to claim 1, wherein
in a tire ground contact shape, when defining a ground contact length in the tire-circumferential direction at a position 10% to the inner side of an entire width of the tire ground contact surface shape from an end portion in the tire-width direction to the inner side as L10, and
defining a maximum ground contact length in the tire-circumferential direction of the tire ground contact shape as L,
a relationship of 0.65≤L10/L≤0.70 is satisfied.

3. The pneumatic tire (1) according to claim 1 or 2,
wherein the main grooves (70) include an inside main groove (71) disposed more to an inner side in the tire-axial direction than the outside main groove (72), and
among the outside main groove (72) and the inside main groove (71) which are adjacent to each other, when defining a cross-sectional area of the inside main groove (71) as CSAI, and defining a cross-sectional area of the outside main groove (72) as CSAO,
a relationship of 0.96≤CSAO/CSAI≤1.00 is satisfied.

4. The pneumatic tire (1) according to claim 1 or 2,
wherein the shoulder slits (84) and the axial-direction sipes (91) are provided to each of the shoulder lands (63) on both sides in the tire-axial direction.

5. The pneumatic tire (1) according to claim 1 or 2, further comprising:
a circumferential-direction sipe (92) which is a groove provided to the shoulder land (63), extending along the tire-circumferential direction and having a narrower groove width than the shoulder slit (84), and intersecting with the axial-direction sipe (91),
wherein, in a vicinity of an intersection point between the axial-direction sipe (91) and the circumferential-direction sipe (92), a groove width of the axial-direction sipe (91) and a groove width of the circumferential-direction sipe (92) are each constant.

6. The tire (1) according to any one of claims 1 to 5, further comprising:
a circumferential-direction sipe (92) which is a groove provided in the shoulder land (63), extending along the tire-circumferential direction and having a narrower groove width than the shoulder slit (84), and intersecting with the axial-direction sipe (91),
wherein, in the tire ground contact shape, a length of the shoulder slit (84) in the tire-axial direction is shorter than a length of the axial-direction sipe (91) in the tire-axial direction.

7. The pneumatic tire (1) according to claim 6,
wherein the shoulder slits (84), the axial-direction sipes (91) and the circumferential-direction sipes (92) are provided to each of the shoulder lands (63) on both sides in the tire-axial direction.

8. The pneumatic tire (1) according to claim 6 or 7,
wherein, in a vicinity of an intersection point (94) between the axial-direction sipe (91) and the circumferential-direction sipe (92), a groove width of the axial-direction sipe (91) and a groove width of the circumferential-direction sipe (92) are each constant.

9. The pneumatic tire (1) according to any one of claims 6 to 8,
wherein, in a vicinity of an intersection point (94) between the axial-direction sipe (91) and the circumferential-direction sipe (92), a widening groove portion (93) is provided at which a groove width of at least one of the axial-direction sipe (91) and the circumferential-direction sipe (92) is wider than a groove width of at least one of the axial-direction sipe (91) and the circumferential-direction sipe (92) at a position distanced from the intersection point (94).

10. The pneumatic tire (1) according to any one of claims 6 to 9,
wherein, in a vicinity of an intersection point (94) between the axial-direction sipe (91) and the circumferential-direction sipe (92), a shallow groove portion (93) is provided at which a groove depth of at least one of the axial-direction sipe (91) and the circumferential-direction sipe (92) is shallower than a groove depth of at least one of the axial-direction sipe (91) and the circumferential-direction sipe (92) at a position distanced from the intersection point (94).
